# EUROPÄISCHE PATENTANMELDUNG

(11) **EP 4 714 584 A2**
(43) Veröffentlichungstag der Anmeldung: **25.03.2026**
(21) Anmeldenummer: 25196761.8
(22) Anmeldetag: 19.08.2025
(51) Int. Cl.: B23K 26/38

(54) **VERFAHREN ZUM HERSTELLEN EINES WERKSTÜCKS MIT EINER FASE, VERFAHREN ZUM PLANEN EINER HERSTELLUNG EINES EINE FASE AUFWEISENDEN WERKSTÜCKS AUS EINEM ROHLING SOWIE LASERSCHNEIDVORRICHTUNG**

(30) Priorität: 23.09.2024 DE 102024127345
(71) Anmelder: Trumpf Werkzeugmaschinen SE & Co. KG, 71254 Ditzingen (DE)
(72) Erfinder: Mach, Patrick, 71404 Korb (DE); Kraus, Christoph, 71272 Ligusterweg 5/1 (DE)
(74) Vertreter: Trumpf Patentabteilung

(57) **Zusammenfassung**

Die Erfindung betrifft ein Verfahren zum Herstellen eines Werkstücks (10) mit einer Fase (20), bei welchem mittels wenigstens eines Laserstrahls (24) ein Gutteil (18) in ein Abfallteil (12) und in das Werkstück (10) zerschnitten wird, wodurch die Fase (20) gebildet wird, wobei mittels des in einer Schneidrichtung bewegten Laserstrahls (28) ein erster Abschnitt der Fase (20) durch Abtrennen eines ersten Bereichs (26) des Abfallteils (12) von dem Werkstück (10) hergestellt wird, anschließend durch Bewegen des Laserstrahls (24) in einer schräg oder senkrecht zur Schneidrichtung verlaufenden Richtung (28) der bereits von dem Gutteil (18) abgetrennte erste Bereich (26) des Abfallteils (12) von einem zweiten Bereich (30) des Abfallteils (12) vollständig abgeschnitten wird und anschließend ein an den ersten Abschnitt (26) in Schneidrichtung anschließender zweiter Abschnitt der Fase (20) mittels des Laserstrahls (24) durch Abtrennen des zweiten Bereichs (30) des Abfallteils (12) von dem Werkstück (10) geschnitten wird.

## Beschreibung

Die Erfindung betrifft ein Verfahren zum Herstellen eines Werkstücks mit einer Fase, ein Verfahren zum Planen einer Herstellung eines eine Fase aufweisenden Werkstücks aus einem Rohling sowie eine Laserschneidvorrichtung.

Die DE 10 2021 005 295 A1 offenbart ein Verfahren zur Herstellung mindestens eines Werkstückteils und eines Restwerkstücks aus einem Werkstück mittels eines gemeinsam aus einer Düse eines Laserbearbeitungskopfs austretenden Laserstrahls und Prozessgasstrahls zum Austrieb von Schmelze. Das Verfahren umfasst eine erste Stufe mit einem Schritt A, in welchem ein Abschnitt eines Schnittspalts mit dem Laserstrahl entlang einer Schnittlinie geschnitten wird oder ein geschlossener Schnittspalt geschnitten wird, wobei eine werkstückteilseitige Schnittkante am Werkstückteil und eine restwerkstückseitige Schnittkante am Restwerkstück gebildet werden. Weiterhin umfasst die erste Stufe einen Schritt B, in welchem mindestens eine lokale Ausnehmung des Schnittspalts im Restwerkstück durch den Laserstrahl erzeugt wird. Als zweite Stufe umfasst das Verfahren das Erzeugen einer Fase an der werkstückteilseitigen Schnittkante an einer oberen Werkstückoberfläche durch Bewegen des Laserstrahls entlang einer Modifikationslinie, während das Werkstückteil mit dem Restwerkstück verbunden ist.

Aufgabe der vorliegenden Erfindung ist es, eine Lösung zu schaffen, mittels welcher eine Kollisionsgefahr eines von einem Gutteil zum Herstellen einer Fase abgeschnittenen Abfallteils mit einem Laserschneidkopf einer Laserschneidvorrichtung besonders gering gehalten werden kann.

Die Aufgabe wird erfindungsgemäß durch die Gegenstände der unabhängigen Ansprüche gelöst. Weitere mögliche Ausgestaltungen der Erfindung sind in den Unteransprüchen, der Beschreibung und der Zeichnung angegeben. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Die Erfindung betrifft ein Verfahren zum Herstellen eines Werkstücks mit einer Fase. Eine Fase ist bei einem Werkstück eine durch Abfasen entstandene schmale Fläche anstelle einer Kante. Insbesondere ist es vorgesehen, dass das Werkstück mittels einer Laserschneidvorrichtung aus einem plattenförmigen Rohling, beispielsweise einem Blech, ausgeschnitten wird. Insbesondere ist der Rohling aus einem metallischen Werkstoff hergestellt. Bei dem Verfahren ist es vorgesehen, dass mittels wenigstens eines Laserstrahls durch Schneiden des Rohlings ein Gutteil von einem Restgitter getrennt wird. Das bedeutet, dass der Rohling in das Gutteil und das Restgitter durch Schneiden mittels des wenigstens einen Laserstrahls unterteilt wird. Weiterhin ist es bei dem Verfahren vorgesehen, dass mittels des wenigstens einen Laserstrahls für das Herstellen des Werkstücks ein Abfallteil von dem Gutteil abgeschnitten wird, wodurch die Fase gebildet wird. Mit anderen Worten wird mittels des Laserstrahls das Gutteil in das Abfallteil und das die Fase aufweisende Werkstück getrennt.

Bei dem Verfahren ist es vorgesehen, dass mittels des in einer Schneidrichtung bewegten Laserstrahls ein erster Abschnitt der Fase durch Abtrennen eines ersten Bereichs des Abfallteils von dem Werkstück hergestellt wird. Anschließend wird durch Bewegen des Laserstrahls in einer schräg oder senkrecht zur Schneidrichtung verlaufenden Richtung der bereits von dem Gutteil abgetrennte erste Bereich des Abfallteils von einem zweiten Bereich des Abfallteils vollständig abgeschnitten. Danach wird ein an den ersten Abschnitt in Schneidrichtung anschließender zweiter Abschnitt der Fase mittels des Laserstrahls durch Abtrennen des zweiten Bereichs des Abfallteils von dem Werkstück geschnitten. Das Abfallteil weist somit unterschiedliche Bereiche auf, welche nacheinander durch Trennen von dem Werkstück abgeschnitten werden, wobei es vorgesehen ist, dass die jeweiligen Bereiche nacheinander erst vom Werkstück abgetrennt und dann von den restlichen Bereichen des Abfallteils getrennt werden, bevor der nächste Bereich des Abfallteils geschnitten wird.

Beim Anbringen der Fase an das Werkstück mittels des Laserstrahls, speziell für das Vorbereiten einer Y-Schweißnaht, einer K-Schweißnaht oder einer X-Schweißnaht, entsteht wenigsten ein Abfallteil mit einem dreieckförmigen Querschnitt. Dieses Abfallteil kann durch eine starke Erwärmung beim Abschneiden des Abfallteils von dem Werkstück verformt und gedehnt werden. Durch diese Dehnung und Verformung kann das Abfallteil in den Schneidbereich einer anderen zu schneidenden Kontur ragen. Dies kann zu Kollisionen zwischen einer Schneiddüse einer den Laserstrahl bereitstellenden Laserschneidvorrichtung und dem Abfallteil führen. Die Schneiddüse beziehungsweise ein die Schneiddüse aufweisender Schneidkopf der Laserschneidvorrichtung kann dadurch kaputtgehen.

Durch Abfalltrennschnitte kann das Abfallteil in kleinere Segmente zerlegt werden, wodurch Verzug und Verformung der jeweiligen Segmente besonders klein ist. Zur Reduzierung der thermischen Spannungen im Abfallteil wird das Abfallteil mit Trennschnitten zerschnitten, sodass thermische Spannungen und Längenausdehnungen des Abfallteils reduziert werden. Der Ablauf kann folgendermaßen erfolgen: In einem ersten Schritt wird ein senkrechter Schnitt ausgeführt, in welchem das Gutteil von dem Restgitter getrennt wird. Anschließend wird in einem zweiten Schritt ein Fasenschnitt, bei welchem das Abfallteil vom Werkstück getrennt wird, bis zu einer Länge von 100 Millimetern durchgeführt. Als nächstes kann der Laserschneidkopf der Laserschneidvorrichtung entgegen der Schneidrichtung 50 Millimeter zurückpositioniert werden, ohne dass dabei der Schneidkopf in seiner Winkelausrichtung verschwenkt wird. Der Laserstrahl kann beim Zurückpositionieren des Schneidkopfs ausgeschaltet sein. An einer vorgegebenen Position für einen Abfalltrennschritt wird der Laserstrahl bereitgestellt und der Abfalltrennschnitt mittels des Laserstrahls ausgeführt. Für den Trennschnitt genügt es, wenn der Laserstrahl entlang einer z-Achse nach oben fährt. Die z-Achse steht senkrecht auf einer Ebene, welche parallel zu einer Oberfläche des Rohlings verläuft, auf welche für das Schneiden des Rohlings der Laserstrahl ausgerichtet wird. Die Oberfläche des Rohlings, auf welche beim Schneiden der Laserstrahl ausgerichtet wird, verläuft parallel zu einer durch eine x-Achse und eine y-Achse der Laserschneidvorrichtung aufgespannte Ebene. Für den Trennschnitt ist alternativ eine Linearbewegung des Schneidkopfs in x-Richtung oder in y-Richtung weg vom Gutteil oder eine kombinierte Bewegung in z-Richtung und x-Richtung und/oder y-Richtung möglich. Nach dem Trennschnitt des Abfallteils kann der Fasenschnitt wieder aufgenommen und die Fase weitergeschnitten werden. Alle 100 Millimeter kann dann der Schneidkopf wieder entgegen der Schneidrichtung zurückpositioniert werden und erneut ein Abfalltrennschnitt gesetzt werden. Mit anderen Worten wird die Fase 100 Millimeter in Schneidrichtung geschnitten und anschließend der Schneidkopf 50 Millimeter entgegen der Schneidrichtung zurückpositioniert und das Abfallteil mittels eines Trennschnitts unterteilt. Das Verfahren ermöglicht eine besonders lange Lebensdauer der Laserschneidvorrichtung, da eine Kollisionsgefahr des Abfallteils mit der Laserschneidvorrichtung besonders geringgehalten werden kann.

In einer möglichen Weiterbildung der Erfindung ist es vorgesehen, dass für das Abtrennen des ersten Bereichs des Abfallteils von dem zweiten Bereich des Abfallteils der Laserstrahl in einer zur Schneidrichtung senkrecht verlaufenden Richtung bewegt wird, welche senkrecht oder parallel zu einer Oberfläche des Gutteils verläuft, auf welche zum Schneiden der Fase der Laserstrahl ausgerichtet ist. Insbesondere wenn der Laserstrahl in der senkrecht zur Schneidrichtung verlaufenden Richtung bewegt wird, welche senkrecht auf der Oberfläche des Gutteils steht, auf welche zum Schneiden der Fase der Laserstrahl ausgerichtet ist, kann der Trennschnitt besonders schnell durchgeführt werden. Es kann somit besonders schnell das Abfallteil in die jeweiligen Bereiche unterteilt werden. Hierdurch kann das Werkstück mit der Fase besonders schnell hergestellt werden. Verläuft die Richtung, in welcher der Laserstrahl für das Durchführen des Trennschnitts bewegt wird, senkrecht zur Schneidrichtung sowie parallel zur Oberfläche des Gutteils, auf welcher zum Schneiden der Fase der Laserstrahl ausgerichtet wird, dann ist ein Abstand eines Schneidkopfs der Laserschneidvorrichtung relativ zu der Oberfläche des Gutteils im Trennschnitt des Abfallteils zumindest im Wesentlichen gleich mit dem Abstand beim Fasenschnitt. Es kann somit sichergestellt werden, dass der Schneidkopf während des gesamten Herstellens des Werkstücks mit der Fase zuverlässig einen vorgegebenen Abstand zum Rohling beziehungsweise zum Gutteil beziehungsweise zum Werkstück aufweist. Es kann hierdurch eine gleichbleibende Schnittkantenqualität des Werkstücks erreicht werden. Ein Umpositionieren einer Höhe des Schneidkopfs kann hierbei unterbleiben.

In einer weiteren möglichen Ausgestaltung der Erfindung ist es vorgesehen, dass das Werkstück mit einer Teilfase hergestellt wird. Die senkrecht zur Oberfläche des Gutteils, auf welche zum Schneiden der Fase der Laserstrahl ausgerichtet ist, verlaufende Höhe der Fase ist somit geringer als eine parallel zur Höhe der Fase verlaufende Dicke des Werkstücks. Das Werkstück kann somit mit Fasen einer Y-Form, einer X-Form oder einer Doppel Y-Form versehen werden. Das Werkstück kann somit mit einer weiteren Komponente mit einer Y-Naht, einer X-Naht - und somit einer DV-Naht - oder einer K-Naht - und somit einer DHV-Naht - oder einer HY-Naht oder einer DHY-Naht oder einer DY-Naht verschweißt werden. Das Werkstück kann somit besonders einfach und sicher mit der weiteren Komponente verschweißt werden.

Die Erfindung betrifft des Weiteren ein Verfahren zum Planen einer Herstellung eines eine Fase aufweisenden Werkstücks aus einem Rohling. Bei dem Verfahren wird mittels einer elektronischen Recheneinrichtung für ein aus einem Rohling mittels einer Laserschneideinrichtung zu schneidendes Werkstück ein Kollisionsbereich ermittelt. Für das Herstellen des Werkstücks ist der Rohling in ein Restgitter und in ein Gutteil zu zerschneiden, wobei das Gutteil für das Herstellen des Werkstücks mit einer Fase in das Werkstück und in wenigstens ein Abfallteil zerschnitten wird. Der Kollisionsbereich kann während des Abschneidens des Abfallteils von dem Werkstück von dem Abfallteil bei einem Umbiegen des Abfallteils erreicht werden. Es wird somit ermittelt, in welchem Bereich in der Umgebung des Werkstücks eine Kollision des Abfallteils mit der Laserschneidvorrichtung oder einem weiteren Gegenstand aufgrund eines Umbiegens beziehungsweise Aufbiegens und Verziehens des Abfallteils in Folge des Wärmeeintrags beim Abschneiden des Abfallteils von dem Werkstück auftreten kann. Es wird somit ermittelt, welcher Bereich in der Umgebung des Werkstücks theoretisch von dem Abfallteil in Folge des Verziehens oder Verbiegens erreicht werden könnte. Bei dem Verfahren ist es weiterhin vorgesehen, dass, wenn ermittelt wird, dass die Laserschneidvorrichtung oder ein weiterer Gegenstand während oder nach dem Schneiden des Abfallteils in dem Kollisionsbereich angeordnet wird, wenigstens eine kollisionsvermeidende Aktion ausgelöst wird. Mit anderen Worten wird somit ermittelt, wie weit sich der Kollisionsbereich erstreckt, in welchem eine mögliche Kollision des Abfallteils mit der Laserschneidvorrichtung und/oder dem weiteren Gegenstand auftreten könnte, und anschließend, sofern ermittelt wird, dass eine Kollision möglich ist, die Aktion ausgelöst, mittels welcher die Kollision vermieden werden soll. Durch die kollisionsvermeidende Aktion kann eine besonders hohe Langlebigkeit der Laserschneidvorrichtung sowie eine besonders geringe Beschädigungsgefahr für den wenigstens einen Gegenstand erreicht werden.

In einer möglichen Weiterbildung der Erfindung ist es vorgesehen, dass der Kollisionsbereich angepasst wird, indem als Aktion vorgesehen wird, dass das Abfallteil sukzessive von dem Werkstück abgeschnitten wird und mittels wenigstens eines Schweißpunkts am Werkstück oder am Restgitter befestigt wird. Insbesondere wird der Schweißpunkt gesetzt, bevor das Abfallteil vollständig von dem Werkstück getrennt ist. Durch das Planen des wenigstens einen Schweißpunkts, mittels welchem das Abfallteil an dem Restgitter oder an dem Werkstück befestigt wird, kann ein Verziehen und Umbiegen des Abfallteils begrenzt werden. Hierdurch kann der Kollisionsbereich, welcher durch Verziehen und Umbiegen des Abfallteils von dem Abfallteil erreicht werden kann, verkleinert werden. Aufgrund des verkleinerten Kollisionsbereichs kann erreicht werden, dass eine Kollisionsgefahr der Laserschneidvorrichtung beziehungsweise des Gegenstands mit dem sich verziehenden und/oder verbiegenden Abfallteil besonders gering ist. Unter dem sukzessiven Schneiden des Abfallteils ist zu verstehen, dass das Abfallteil nicht in einem einzigen durchgängigen Fasenschnitt vom Werkstück getrennt wird, sondern abschnittsweise vom Werkstück durch den Fasenschnitt getrennt wird, wobei nach dem Trennen des jeweiligen Abschnitts des Abfallteils von dem Werkstück der bereits von dem Werkstück getrennte Bereich des Abfallteils mittels wenigstens eines Schweißpunkts am Restgitter oder am Werkstück fixiert wird und/oder durch Durchführen eines Trennschnitts von dem Bereich des Abfallteils, welcher noch mit dem Werkstück einstückig verbunden ist, abgeschnitten wird.

In einer weiteren möglichen Ausgestaltung der Erfindung ist es vorgesehen, dass der Kollisionsbereich angepasst wird, indem als Aktion vorgesehen wird, dass das Abfallteil während des Schneidens von dem Werkstück mittels wenigstens einer Materialbrücke am Werkstück oder am Restgitter gehalten wird. Diese Materialbrücke kann auch als sogenannter Joint bezeichnet werden. Diese Materialbrücke wird beim Schneiden des Abfallteils aus dem Gutteil beziehungsweise beim Schneiden des Gutteils aus dem Rohling stehen gelassen. Die Materialbrücke erstreckt sich insbesondere lediglich über einen Teilbereich der Dicke des Rohlings, insbesondere lediglich über einen Teilbereich der parallel zur Dickenrichtung des Rohlings verlaufenden Dicke des Abfallteils. Die wenigstens eine Materialbrücke ermöglicht ein besonders einfaches und zuverlässiges Begrenzen eines Verziehens und Verbiegens des Abfallteils, wodurch der Kollisionsbereich besonders gut begrenzt beziehungsweise reduziert werden kann. Hierdurch kann die Kollisionsgefahr des Laserschneidkopfs beziehungsweise des Gegenstands mit dem Abfallteil besonders geringgehalten werden.

In einer weiteren möglichen Ausgestaltung der Erfindung ist es vorgesehen, dass der Kollisionsbereich angepasst wird, indem als Aktion vorgesehen wird, dass das Abfallteil sukzessive von dem Werkstück abgeschnitten wird und wenigstens ein bereits von dem Werkstück abgeschnittener erster Bereich des Abfallteils von einem zweiten Bereich des Abfallteils abgeschnitten wird, während der zweite Bereich noch einstückig mit dem Werkstück verbunden ist. Es werden somit jeweilige Positionen von Trennschnitten für das Abfallteil als Aktion geplant, wobei durch das Durchführen der jeweiligen Trennschnitte der Kollisionsbereich in seiner Erstreckung eingeschränkt werden kann und somit verkleinert werden kann. Durch das Verkleinern des Kollisionsbereichs kann eine Gefahr einer Kollision des Abfallteils mit dem Gegenstand beziehungsweise mit der Laserschneidvorrichtung besonders geringgehalten werden. Insbesondere kann das derart geplante Herstellen des die Fase aufweisenden Werkstücks im Rahmen des bereits beschriebenen erfindungsgemäßen Verfahrens zum Herstellen des die Fase aufweisenden Werkstücks umgesetzt werden.

In einer weiteren möglichen Ausgestaltung der Erfindung ist es vorgesehen, dass als Aktion eine vorgegebene Schneidreihenfolge und/oder eine vorgegebene Relativposition des Werkstücks und wenigstens eines weiteren, aus dem Rohling zu schneidenden Bauteils angepasst wird. Durch Anpassen der Schneidreihenfolge kann erreicht werden, dass eine Kollisionsgefahr des Laserschneidkopfs mit dem sich verziehenden beziehungsweise verbiegenden Abfallteil besonders geringgehalten werden kann. Beispielsweise kann mittels der Laserschneidvorrichtung als erstes ein weiteres, aus dem Rohling zu schneidendes Bauteil geschnitten werden und daran anschließend das Werkstück aus dem Rohling ausgeschnitten werden. Würde als erstes das Werkstück ausgeschnitten werden und würde sich hierbei das Abfallteil verziehen beziehungsweise umbiegen, dann könnte eine Kollision der Laserschneidvorrichtung mit dem Abfallteil beim Schneiden des weiteren Bauteils auftreten, wenn die Laserschneidvorrichtung beim Schneiden des weiteren Bauteils in den Kollisionsbereich des Abfallteils hineinbewegt wird. Wird jedoch erst das weitere Bauteil aus dem Rohling ausgeschnitten und anschließend das Werkstück aus dem Rohling ausgeschnitten, dann unterbleibt die Kollision der Laserschneidvorrichtung mit dem Abfallteil, da das Abfallteil während das weitere Bauteil geschnitten wird noch gar nicht von dem Gutteil getrennt ist beziehungsweise wird. Durch Anpassen der geplanten Relativposition des Werkstücks zu dem weiteren Bauteil auf dem Rohling kann darüber hinaus erreicht werden, dass beim Schneiden des weiteren Bauteils die Laserschneidvorrichtung nicht in den Kollisionsbereich des Abfallteils hineinbewegt wird. Hierdurch kann eine Kollisionsgefahr für eine Kollision der Laserschneidvorrichtung mit dem Abfallteil besonders geringgehalten werden. Es ist möglich, dass mehrere der genannten Aktionen miteinander kombiniert werden, um eine Kollisionsgefahr der Laserschneidvorrichtung mit dem Abfallteil beziehungsweise des weiteren Gegenstands mit dem Abfallteil besonders gering zu halten.

In einer weiteren möglichen Ausgestaltung der Erfindung ist es vorgesehen, dass der Kollisionsbereich ermittelt wird, indem eine in Schneidrichtung verlaufende Länge des Abfallteils ermittelt wird und diese ermittelte Länge um jeden Punkt der an dem Werkstück herzustellenden Fase gedreht wird. Insbesondere wird die ermittelte Länge um jeden Punkt der an dem Werkstück herzustellenden Fase in alle Raumrichtungen gedreht. Hierdurch kann derjenige Bereich um das Werkstück als Kollisionsbereich ermittelt werden, welcher von dem Abfallteil maximal durch Verziehen oder Verbiegen erreicht werden kann, sofern das Abfallteil zumindest an einem Punkt noch an dem Werkstück oder an dem Restgitter gehalten ist. Es kann somit der Kollisionsbereich besonders einfach und präzise ermittelt werden.

Die Erfindung betrifft des Weiteren eine Laserschneidvorrichtung, welche dazu eingerichtet ist, ein Verfahren durchzuführen, wie es bereits im Zusammenhang mit dem erfindungsgemäßen Verfahren zum Herstellen eines Werkstücks mit einer Fase beschrieben worden ist. Das bedeutet, dass die Laserschneidvorrichtung dazu eingerichtet ist, ein Werkstück mit einer Fase herzustellen. Hierfür ist die Laserschneidvorrichtung dazu eingerichtet, mittels wenigstens eines Laserstrahls durch Schneiden eines Rohlings ein Gutteil von einem Restgitter zu trennen. Die Laserschneidvorrichtung ist dazu eingerichtet, den wenigstens einen Laserstrahl bereitzustellen und auf den Rohling auszurichten, welcher in das Gutteil und das Restgitter zu zerschneiden ist. Die Laserschneidvorrichtung ist weiterhin dazu eingerichtet, mittels des wenigstens einen Laserstrahls für das Herstellen des Werkstücks ein Abfallteil von dem Gutteil abzuschneiden, wodurch die Fase gebildet wird. Weiterhin ist die Laserschneidvorrichtung dazu eingerichtet, mittels des in einer Schneidrichtung bewegten Laserstrahls einen ersten Abschnitt der Fase durch Abtrennen eines ersten Bereichs des Abfallteils von dem Werkstück herzustellen, anschließend durch Bewegen des Laserstrahls in einer schräg oder senkrecht zur Schneidrichtung verlaufenden Richtung den bereits von dem Gutteil abgetrennten ersten Bereich des Abfallteils von einem zweiten Bereich des Abfallteils vollständig abzuschneiden und anschließend einen an den ersten Abschnitt in Schneidrichtung anschließenden zweiten Abschnitt der Fase mittels des Laserstrahls durch Abtrennen des zweiten Bereichs des Abfallteils von dem Werkstück zu schneiden.

Die Laserschneidvorrichtung kann des Weiteren eine elektronische Recheneinrichtung umfassen, welche dazu eingerichtet ist, ein Verfahren wie es bereits im Zusammenhang mit dem erfindungsgemäßen Verfahren zum Planen einer Herstellung eines eine Fase aufweisenden Werkstücks aus einem Rohling beschrieben worden ist, durchzuführen.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Schnittansicht eines Rohlings, welcher in ein Werkstück, in ein Abfallteil und in ein Restgitter unterteilt ist;
- Fig. 2: eine schematische Draufsicht auf den Rohling, aus welchem das Werkstück mit einer Fase sowie weitere Bauteile auszuschneiden sind.

Gleiche oder funktionsgleiche Elemente sind in den Figuren mit den gleichen Bezugszeichen versehen.

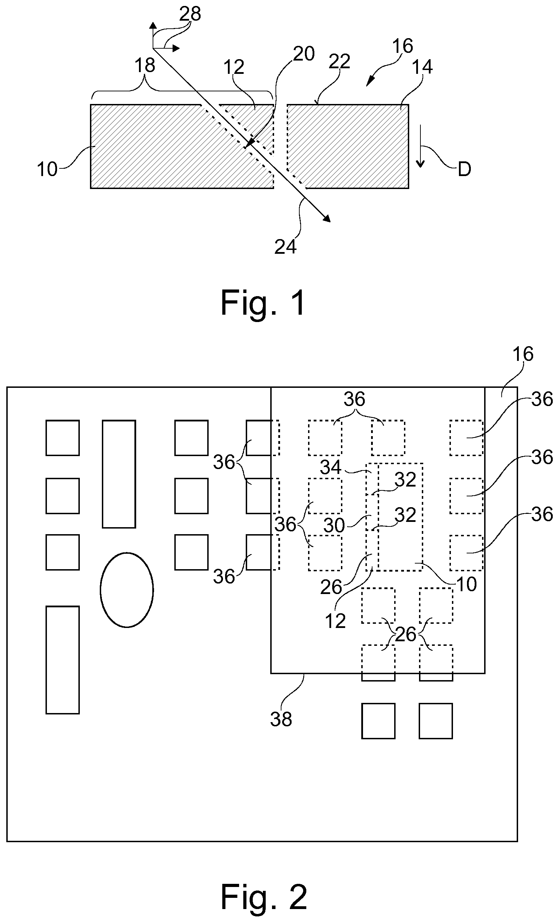

In Fig. 1 ist in einer schematischen Schnittansicht ein in ein Werkstück 10, ein Abfallteil 12 und ein Restgitter 14 unterteilter Rohling 16 gezeigt. Es ist vorgesehen, dass der Rohling 16 als erstes mittels eines Laserstrahls 24 in ein Gutteil 18 sowie das Restgitter 14 unterteilt wird. Das Gutteil 18 wird wiederum mittels wenigstens eines Laserstrahls 24 in das Werkstück 10 sowie in das Abfallteil 12 unterteilt. Durch Abschneiden des Abfallteils 12 von dem Werkstück 10 wird das Werkstück 10 mit einer Fase 20 hergestellt. Das beschriebene Verfahren wird insbesondere mittels einer Laserschneidvorrichtung durchgeführt, welche dazu eingerichtet ist, den Laserstrahl 24 bereitzustellen.

Für das Trennen des Rohlings 16 in das Gutteil 18 und das Restgitter 14 wird wenigstens ein Laserstrahl 24 auf eine dem Laserstrahl 24 zugewandte Oberfläche 22 des Rohlings 16 ausgerichtet. Insbesondere wird der Laserstrahl 24 senkrecht auf die Oberfläche 22 ausgerichtet. Hierdurch verläuft ein Schnitt durch den Rohling 16 zumindest im Wesentlichen senkrecht zu der Oberfläche 22. Der Rohling 16 wird mittels des Laserstrahls 24 in seiner gesamten in Dickenrichtung D verlaufenden Dicke geschnitten. Für das Schneiden des Gutteils 18 aus dem Restgitter 14 wird der Laserstrahl 24 über die Oberfläche 22 in einer Schneidrichtung bewegt, welche in Fig. 1 in die Bildebene hinein verläuft. Insbesondere verläuft die Schneidrichtung senkrecht zur Dickenrichtung D. Bei dem Rohling 16 handelt es sich insbesondere um ein Blech aus einem metallischen Werkstoff, welches auch als Tafel bezeichnet werden kann.

Für das Unterteilen des Gutteils 18 in das Werkstück 10 und das Abfallteil 12 wird der Laserstrahl 24 schräg auf die dem Laserstrahl 24 zugewandte Oberfläche 22 des Gutteils 18 ausgerichtet und in Schneidrichtung bewegt, wodurch durch Abtrennen des Abfallteils 12 von dem Werkstück 10 das Werkstück 10 mit der Fase 20 hergestellt wird. Vorliegend weist das Abfallteil 12 in seinem senkrecht zur Schneidrichtung verlaufenden Querschnitt eine dreieckige Form auf.

Wie in Fig. 1 besonders gut erkannt werden kann, ist es bei dem Verfahren zum Herstellen des Werkstücks 10 vorgesehen, dass das Werkstück 10 mit einer Teilfase als Fase 20 hergestellt wird. Beim Herstellen des Werkstücks 10 mit der Fase 20 mittels des Laserstrahls 24, insbesondere zum Vorbereiten einer Y-Naht, einer K-Naht oder einer X-Naht, entsteht das Abfallteil 12 mit dem dreieckigen Querschnitt. Dieses Abfallteil 12 kann durch eine starke Erwärmung beim Trennen des Abfallteils 12 vom Werkstück 10 verformt und gedehnt werden. Durch diese Dehnung und Verformung kann das Abfallteil 12 in den Schneidbereich anderer, in den Rohling 16 zu schneidender Schneidkonturen ragen. Dies kann zu Kollisionen zwischen dem Laserschneidkopf, insbesondere einer Schneiddüse des Laserschneidkopfs, und dem Abfallteil 12 führen. Dadurch kann der Laserschneidkopf, insbesondere die Schneiddüse, kaputt gehen. Um dieses Beschädigen des Laserschneidkopfs, insbesondere der Schneiddüse, zu vermeiden, ist es beim Verfahren zum Herstellen des Werkstücks 10 vorliegend vorgesehen, dass mittels des Laserstrahls 24 das Abfallteil 12 vor einem vollständigen Abtrennen von dem Werkstück 10 in einem bereits von dem Werkstück 10 abgetrennten Bereich zerschnitten wird.

Hierbei ist es vorgesehen, dass mittels des in Schneidrichtung bewegten Laserstrahls 24 ein erster Abschnitt der Fase 20 durch Abtrennen eines ersten Bereichs 26 des Abfallteils 12 von dem Werkstück 10 hergestellt wird. Anschließend wird durch Bewegen des Laserstrahls 24 in einer schräg oder senkrecht zur Schneidrichtung verlaufenden Richtung 28 der bereits von dem Gutteil 18 abgetrennte erste Bereich 26 des Abfallteils 12 von einem zweiten Bereich 30 des Abfallteils 12 vollständig abgeschnitten. Anschließend wird ein an den ersten Abschnitt in Schneidrichtung anschließender zweiter Abschnitt der Fase 20 mittels des Laserstrahls 24 durch Abtrennen des zweiten Bereichs 30 des Abfallteils 12 von dem Werkstück 10 geschnitten. Es wird somit wenigstens ein Trennschnitt 32 vorgesehen, mittels welchem das Abfallteil 12 zu zerteilen ist.

In der in Fig. 2 gezeigten Draufsicht auf den Rohling 16 ist ein Werkstück 10 gezeigt, für dessen Herstellung das Abfallteil 12 mittels zwei Trennschnitten 32 in drei Teile zu unterteilen ist. Den ersten Teil bildet der erste Bereich 26 des Abfallteils 12, den zweiten Teil bildet der zweite Bereich 30 des Abfallteils 12 und den dritten Teil bildet ein dritter Bereich 34 des Abfallteils 12. Für das Durchführen der jeweiligen Trennschnitte 32 ist es insbesondere vorgesehen, dass der Laserstrahl 24 in einer zur Schneidrichtung senkrecht verlaufenden Richtung 28 bewegt wird, welche senkrecht zu der Oberfläche 22 verläuft und somit in Fig. 1 nach oben verläuft, oder parallel zur Oberfläche 22 verläuft und somit in Fig. 1 zur Seite hin verläuft. Unterschiedliche Trennschnitte 32 können durch unterschiedliche Bewegungen des Laserstrahls 24 in Bezug auf die Oberfläche 22 durchgeführt werden.

In Fig. 2 ist in einer schematischen Draufsicht der Rohling 16 gezeigt, wobei erkannt werden kann, dass aus dem Rohling 16 das Werkstück 10 sowie weitere Bauteile 36 auszuschneiden sind. In Fig. 2 können besonders gut die Relativpositionen der weiteren Bauteile 36 zu dem Werkstück 10 erkannt werden. Aus Übersichtlichkeitsgründen sind lediglich einzelne der weiteren Bauteile 36 mit dem zugehörigen Bezugszeichen versehen. In Fig. 2 kann weiterhin ein Kollisionsbereich 38 erkannt werden, welcher für das Abfallteil 12 ermittelt worden ist. Der Kollisionsbereich 38 wird ermittelt, indem eine in Schneidrichtung verlaufende Länge des Abfallteils 12 ermittelt wird und diese ermittelte Länge um jeden Punkt der an dem Werkstück 10 herzustellenden Fase 20 gedreht wird. Um die Herstellung des Werkstücks 10 zu planen, ist es vorgesehen, dass die Erstreckung des Kollisionsbereichs 38 ermittelt wird und anschließend eine kollisionsvermeidende Aktion ausgelöst wird, wenn ermittelt wird, dass die Laserschneidvorrichtung oder ein weiterer Gegenstand während oder nach dem Schneiden des Abfallteils 12 in dem Kollisionsbereich 38 angeordnet sind. Beispielsweise kann die Laserschneidvorrichtung in den Kollisionsbereich 38 hineinbewegt werden, um eines der weiteren Bauteile 36 aus dem Rohling 16 zu schneiden. Es ist nun zu vermeiden, dass eine Kollision des Laserschneidkopfs beim Schneiden des Werkstücks 10 oder beim Schneiden eines der weiteren Bauteile 36 mit dem Abfallteil 12 auftritt aufgrund eines sich beim Schneiden des Abfallteils 12 ergebenden Verzugs oder Verbiegens des Abfallteils 12.

Als kollisionsvermeidende Aktion ist es möglich, dass eine vorgesehene Schneidreihenfolge und/oder eine vorgesehene Relativposition des Werkstücks 10 zu wenigstens einem der weiteren, aus dem Rohling 16 zu schneidenden Bauteile 36 angepasst wird. Insbesondere können die weiteren Bauteile 36 derart in Bezug auf den Rohling 16 platziert werden, dass diese sich vollständig außerhalb des Kollisionsbereichs 38 befinden. Alternativ oder zusätzlich kann es vorgesehen sein, dass für das Begrenzen eines Verziehens beziehungsweise Verbiegens des Abfallteils 12 das Abfallteil 12 mittels wenigstens eines Schweißpunkts und/oder mittels wenigstens einer Materialbrücke am Werkstück 10 und/oder am Restgitter 14 während des Schneidens der Fase 20 gehalten wird. Insbesondere beim Befestigen des Abfallteils 12 mittels des Schweißpunkts am Werkstück 10 oder am Restgitter 14 kann die Fase 20 sukzessive und somit abschnittsweise geschnitten werden, wobei die jeweiligen bereits geschnittenen Abschnitte der Fase 20 mittels wenigstens eines Schweißpunkts an dem Werkstück 10 und/oder an dem Restgitter 14 befestigt werden, bevor ein weiterer Abschnitt der Fase 20 geschnitten wird. Jeweilige Materialbrücken können beim Schneiden der Fase 20 stehengelassen werden. Weiterhin alternativ oder zusätzlich ist es möglich, dass als kollisionsvermeidende Aktion vorgesehen ist, dass das Abfallteil 12 sukzessive von dem Werkstück 10 abgeschnitten wird und wenigstens ein bereits von dem Werkstück 10 abgeschnittener erster Bereich 26 des Abfallteils 12 von dem zweiten Bereich 30 des Abfallteils 12 abgeschnitten wird, während der zweite Bereich 30 noch einstückig mit dem Werkstück 10 verbunden ist und somit noch an dem Werkstück 10 gehalten ist.

Durch das Vorsehen des wenigstens einen Materialstegs und/oder des wenigstens einen Schweißpunkts kann das Verziehen beziehungsweise Verbiegen des Abfallteils 12 aufgrund der Befestigung an dem Werkstück 10 beziehungsweise an dem Restgitter 14 begrenzt werden, wodurch der Kollisionsbereich 38 im Vergleich zu einem Kollisionsbereich ohne Materialstege und Schweißpunkte zum Verbinden des Abfallteils 12 mit dem Werkstück 10 beziehungsweise dem Restgitter 14 verkleinert werden kann. Auch durch das Zerschneiden des Abfallteils 12 während die Fase 20 sukzessive an dem Werkstück 10 angebracht wird, kann erreicht werden, dass der Kollisionsbereich 38 verkleinert wird, da jeweilige Abschnitte des Abfallteils 12, welche sich beim Schneiden der Fase 20 verziehen beziehungsweise verbiegen könnten, kürzer sind als die gesamte in Schneidrichtung verlaufende Länge des Abfallteils 12, wodurch der von den jeweiligen Abschnitten des Abfallteils 12 erreichbare Bereich, bei welchem es sich um den angepassten Kollisionsbereich 38 handelt, kleiner ist als der Kollisionsbereich 38, welcher von dem unzerschnittenen Abfallteil 12 theoretisch durch Verbiegen beziehungsweise Verzug hätte erreicht werden können.

Dem beschriebenen Verfahren liegt die Erkenntnis zugrunde, dass beim Schrägschneiden Kollisionen zwischen dem Abfallteil 12 und einem Schneidkopf beziehungsweise einer Schneiddüse der Laserschneidvorrichtung auftreten können. Diese Abfallteile 12 entstehen beim Schneiden von Fasen 20 und können durch einen Wärmeeintrag in das Gutteil 18 einem starken Verzug ausgesetzt sein, wodurch die jeweiligen Abfallteile 12 ihre Lage in Bezug auf einen Rest des Rohlings 16 verändern. Somit können die Abfallteile 12 in noch nicht geschnittene Bereiche des Rohlings 16 unvorhergesehen hineinragen und zu Kollisionen mit der Schneiddüse führen.

Mittels einer Software können Kollisionsbereiche 38 und Sicherheitsbereiche des Rohlings 16 definiert werden. Die Kollisionsbereiche 38 sind Bereiche, bei denen die Schneiddüse mit den im senkrecht zur Schneidrichtung verlaufenden Querschnitt dreieckförmigen Abfallteilen 12 kollidieren kann. Sicherheitsbereiche sind diejenigen Bereiche des Rohlings 16, in welchen die Laserschneidvorrichtung beziehungsweise der weitere Gegenstand angeordnet werden können, ohne dass eine Gefahr einer Kollision mit dem wenigstens einen Abfallteil 12 besteht. Jeweilige Kollisionsbereiche 38 können durch Schneidstrategien, wie beispielsweise durch Stehenlassen von Materialbrücken oder durch Zerschneiden des jeweiligen Abfallteils 12, aufgelöst werden.

Die Software kann den wenigstens einen Kollisionsbereich 38 ermitteln, indem die Länge des jeweiligen Abfallteils 12 bestimmt wird. Die Länge ergibt sich aus der Länge der zu schneidenden Fase 20 am Werkstück 10. Der Kollisionsbereich 38 ergibt sich, indem um jeden Punkt auf der Fase 20 die Länge des Abfallteils 12 gedreht wird. Sollte in diesem Kollisionsbereich 38 nach dem Schneiden der Fase 20 ein weiterer Schnitt oder das Schneiden eines weiteren Bauteils 36 erfolgen, kann dies zu einer Kollision des Abfallteils 12 mit der Schneiddüse der Laserschneidvorrichtung führen. Die Software kann weiterhin die Sicherheitsbereiche ermitteln. Dies sind Bereiche, in denen keine Kollision des Abfallteils 12 mit der Schneiddüse der Laserschneidvorrichtung stattfinden kann. Der Rohling 16 kann in Sicherheitsbereichen problemlos geschnitten werden. Die Software ist in der Lage, Kollisionsbereiche 38 aufzulösen oder stark zu reduzieren, indem das Stehenlassen von Materialbrücken , das Setzen von Schweißpunkten oder ein Zerschneiden des Abfallteils 12 vorgesehen wird. Mit dem Zerschneiden des wenigstens einen Abfallteils 12 kann der Kollisionsbereich 38 stark reduziert werden. Im besten Fall kann der Kollisionsbereich 38 sogar so stark reduziert werden, dass benachbarte Bauteile 36 nicht mehr im Kollisionsbereich 38 liegen und die angrenzenden Bauteile 36 ohne Kollisionen der Laserschneidvorrichtung mit dem Abfallteil 12 geschnitten werden können. Eine andere Methode den Kollisionsbereich 38 aufzulösen oder stark zu reduzieren ist das Setzen von Schweißpunkten oder das Stehenlassen von Materialbrücken an dem Abfallteil 12. Hierdurch wird das Abfallteil 12 mit dem Gutteil 18 und einem Restgitter 14 verbunden. Nach dem Schneiden ist das Abfallteil 12 mechanisch zumindest von dem Werkstück 10 zu trennen.

Durch das Bestimmen von Sicherheitsbereichen und Kollisionsbereichen 38 mittels Software kann eine Anzahl von Materialbrücken beziehungsweise eine Anzahl jeweiliger Trennschnitte 32 für das Zerschneiden des wenigstens einen Abfallteils 12 so gering wie möglich gehalten werden, wodurch das Werkstück 10 besonders schnell hergestellt werden kann.

Im Folgenden wird ein Beispiel für ein Schneiden einer Y-Fase in einem 8-Millimeter-Baustahlblech als Rohling 16 beschrieben. Als erstes erfolgt eine Verschachtelung und Programmierung in einem CAD/CAM-System. Anschließend wird wenigstens ein Kollisionsbereich 38 und gegebenenfalls zusätzlich wenigstens ein Sicherheitsbereich des Blechs, welches auch als Tafel bezeichnet werden kann, im CAD/CAM-System bestimmt. Danach wird eine Schneidreihenfolge berechnet und der wenigstens eine Kollisionsbereich 38 im CAD/CAM-System aufgelöst beziehungsweise reduziert. Im Anschluss daran wird ein NC-Programm erstellt und auf die Laserschneidvorrichtung aufgespielt. Mit dem erzeugten NC-Programm wird das 8 Millimeter dicke Baustahlblech mittels der Laserschneidvorrichtung geschnitten, wobei alle Teile in Sicherheitsbereichen geschnitten werden und anschließend alle Teile in dem wenigstens einen Kollisionsbereich 38 geschnitten werden und der wenigstens eine Kollisionsbereich 38 durch Stehenlassen von Materialbrücken oder Zerschneiden des Abfallteils 12 aufgelöst wird. Danach werden alle übrigen Teile geschnitten, welche im Kollisionsbereich 38 lagen und vor dem Auflösen des Kollisionsbereichs 38 nicht geschnitten werden konnten. Danach wird das Programm beendet und die aus dem Rohling 16 ausgeschnittenen Teile absortiert.

Insgesamt zeigt die Erfindung wie ein kollisionssicheres Schrägschneiden umgesetzt werden kann.

### BEZUGSZEICHENLISTE

- 10: Werkstück
- 12: Abfallteil
- 14: Restgitter
- 16: Rohling
- 18: Gutteil
- 20: Fase
- 22: Oberfläche
- 24: Laserstrahl
- 26: erster Bereich
- 28: Richtung
- 30: zweiter Bereich
- 32: Trennschnitt
- 34: dritter Bereich
- 36: Bauteil
- 38: Kollisionsbereich
- D: Dickenrichtung

## Patentansprüche

1. Verfahren zum Herstellen eines Werkstücks (10) mit einer Fase (20), bei welchem
- mittels wenigstens eines Laserstrahls (24) durch Schneiden eines Rohlings (16) ein Gutteil (18) von einem Restgitter (14) getrennt wird,
- mittels des Laserstrahls (24) für das Herstellen des Werkstücks (10) das Gutteil (18) in ein Abfallteil (12) und in das Werkstück (10) zerschnitten wird, wodurch die Fase (20) gebildet wird, wobei
- mittels des in einer Schneidrichtung bewegten Laserstrahls (28) ein erster Abschnitt der Fase (20) durch Abtrennen eines ersten Bereichs (26) des Abfallteils (12) von dem Werkstück (10) hergestellt wird, anschließend durch Bewegen des Laserstrahls (24) in einer schräg oder senkrecht zur Schneidrichtung verlaufenden Richtung (28) der bereits von dem Gutteil (18) abgetrennte erste Bereich (26) des Abfallteils (12) von einem zweiten Bereich (30) des Abfallteils (12) vollständig abgeschnitten wird und anschließend ein an den ersten Abschnitt (26) in Schneidrichtung anschließender zweiter Abschnitt der Fase (20) mittels des Laserstrahls (24) durch Abtrennen des zweiten Bereichs (30) des Abfallteils (12) von dem Werkstück (10) geschnitten wird.

2. Verfahren nach Anspruch 1,
**dadurch gekennzeichnet, dass**
für das Abtrennen des ersten Bereichs (26) des Abfallteils (12) von dem zweiten Bereich (30) des Abfallteils (12) der Laserstrahl (24) in einer zur Schneidrichtung senkrecht verlaufenden Richtung (28) bewegt wird, welche senkrecht oder parallel zu einer Oberfläche des Gutteils (18) verläuft, auf welche zum Schneiden der Fase (20) der Laserstrahl (24) ausgerichtet ist.

3. Verfahren nach Anspruch 1 oder 2,
**dadurch gekennzeichnet, dass**
das Werkstück (10) mit einer Teilfase hergestellt wird.

4. Verfahren zum Planen einer Herstellung eines eine Fase (20) aufweisenden Werkstücks (10) aus einem Rohling (16), bei welchem
- mittels einer elektronischen Recheneinrichtung für ein aus einem Rohling (16) mittels einer Laserschneidvorrichtung zu schneidendes Werkstück (10), für dessen Herstellung der Rohling (16) in ein Restgitter (14) und in ein Gutteil (18) zu schneiden ist, wobei das Gutteil (18) für das Herstellen des Werkstücks (10) mit einer Fase (20) in das Werkstück (10) und in wenigstens ein Abfallteil (12) zerschnitten wird, ein Kollisionsbereich (38) ermittelt wird, welcher während des Abschneidens des Abfallteils (12) von dem Werkstück (10) von dem Abfallteil (12) bei einem Umbiegen des Abfallteils (12) erreicht werden kann, und
- wenn ermittelt wird, dass die Laserschneidvorrichtung oder ein weiterer Gegenstand während oder nach dem Schneiden des Abfallteils (12) in dem Kollisionsbereich (38) angeordnet werden, wenigstens eine kollisionsvermeidende Aktion ausgelöst wird.

5. Verfahren nach Anspruch 4,
**dadurch gekennzeichnet, dass**
der Kollisionsbereich (38) angepasst wird, indem als Aktion vorgesehen wird, dass das Abfallteil (12) sukzessive von dem Werkstück (10) abgeschnitten wird und mittels wenigstens eines Schweißpunkts am Werkstück (10) oder am Restgitter (14) befestigt wird, insbesondere wird der Schweißpunkt gesetzt, bevor das Abfallteil (12) vollständig von dem Werkstück (10) getrennt ist.

6. Verfahren nach Anspruch 4 oder 5,
**dadurch gekennzeichnet, dass**
der Kollisionsbereich (38) angepasst wird, indem als Aktion vorgesehen wird, dass das Abfallteil (12) während des Schneidens von dem Werkstück (10) mittels wenigstens einer Materialbrücke am Werkstück (10) oder am Restgitter (14) gehalten wird.

7. Verfahren nach einem der Ansprüche 4 bis 6,
**dadurch gekennzeichnet, dass**
der Kollisionsbereich (38) angepasst wird, indem als Aktion vorgesehen wird, dass das Abfallteil (12) sukzessive von dem Werkstück (10) abgeschnitten wird und wenigstens ein bereits von dem Werkstück (10) abgeschnittener erster Bereich (26) des Abfallteils (12) von einem zweiten Bereich (30) des Abfallteils (12) abgeschnitten wird, während der zweite Bereich (30) noch einstückig mit dem Werkstück (10) verbunden ist.

8. Verfahren nach einem der Ansprüche 4 bis 7,
**dadurch gekennzeichnet, dass**
als Aktion eine vorgesehene Schneidreihenfolge und/oder eine vorgesehene Relativposition des Werkstücks (10) und wenigstens eines weiteren, aus dem Rohling (16) zu schneidenden Bauteils (36) angepasst wird.

9. Verfahren nach einem der Ansprüche 4 bis 8,
**dadurch gekennzeichnet, dass**
der Kollisionsbereich (38) ermittelt wird, indem eine in Schneidrichtung verlaufende Länge des Abfallteils (12) ermittelt wird und diese ermittelte Länge um jeden Punkt der an dem Werkstück (10) herzustellenden Fase (20) gedreht wird.

10. Laserschneidvorrichtung, welche dazu eingerichtet ist, ein Verfahren nach einem der vorhergehenden Ansprüche durchzuführen.
